# EUROPÄISCHE PATENTSCHRIFT

(11) **EP 2 496 811 B1**
(45) Veröffentlichungstag und Bekanntmachung des Hinweises auf die Patenterteilung: **06.03.2019**
(21) Anmeldenummer: 10765382.6
(22) Anmeldetag: 02.10.2010
(51) Int. Cl.: F02D 13/02, F02D 41/30, F02D 41/40

(54) **MAGERES BRENNVERFAHREN FÜR EINE HUBKOLBEN-BRENNKRAFTMASCHINE**
LEAN COMBUSTION METHOD FOR A RECIPROCATING INTERNAL COMBUSTION ENGINE
PROCÉDÉ DE COMBUSTION MAIGRE POUR UN MOTEUR À COMBUSTION INTERNE À PISTON ALTERNATIF

(30) Priorität: 05.11.2009 DE 102009052017
(43) Veröffentlichungstag der Anmeldung: 12.09.2012
(73) Patentinhaber: Bayerische Motoren Werke Aktiengesellschaft, 80809 München (DE)
(72) Erfinder: HUEBNER, Walter, 85598 Baldham (DE); GERKE, Udo, 85276 Pfaffenhofen (DE); SPICHER, Ulrich, 76863 Herxheim (DE); VELJI, Amin, 76131 Karlsruhe (DE); HÖNL, Michael, 76185 Karlsruhe (DE); BOULOUCHOS, Konstantinos, CH-8006 Zürich (CH); LÄMMLE, Christian, CH-8332 Russikon (CH); PETERS, Norbert, 52070 Aachen (DE); RÖHL, Olaf, 70374 Stuttgart (DE); SCHULZ, Christof, 50672 Köln (DE); BENSING, Dennis, 44809 Bochum (DE)
(74) Vertreter: Bücken, Helmut
(86) Internationale Anmeldenummer: PCT/EP2010/006024
(87) Internationale Veröffentlichungsnummer: WO 2011/063875

(56) Entgegenhaltungen:
- EP-A1- 1 681 452
- DE-A1- 10 350 797
- DE-A1- 19 818 596
- DE-A1-102007 016 278

## Beschreibung

Die Erfindung betrifft ein mageres Brennverfahren für eine Hubkolben-Brennkraftmaschine mit den Merkmalen aus dem Oberbegriff des Patentanspruchs 1.

Bei den in der Entwicklung befindlichen HCCI-Brennverfahren (Homogeneous Charge Compression Ignition) und CAI-Brennverfahren (Controlled Auto Ignition), wird der Brennbeginn (Selbstzündung) über die Temperatur durch die Höhe der AGR-Rate (Abgasrückführrate) gesteuert. Die notwendig hohe AGR-Rate wird z. B. durch ein frühes Schließen der Gaswechselauslassventile, d. h. vor dem Ladungswechseltotpunkt (LWOT), eingestellt. Dies führt zu einer negativen Ventilüberschneidung zwischen Gaswechseleinlassventil und Gaswechselauslassventil, da das Gaswechseleinlassventil erst nach dem LWOT öffnet und damit zu einer Zwischenkompression im LWOT.

Durch eine Voreinspritzung während dieser Zwischenkompression ist es möglich, entweder die Temperatur anzuheben (bei teilweiser bzw. vollständiger Umsetzung des eingespritzten Kraftstoffs) oder es bilden sich Zwischenprodukte, die zu einer Erhöhung der Zündwilligkeit des Gemisches führen. Mit dieser Voreinspritzung lässt sich der Beginn der Selbstzündung beeinflussen. Beispielsweise in der Patentschrift DE 198 10 935 C2 von der die vorliegende Erfindung ausgeht, werden hierzu Ausführungsbeispiele genannt. Grundsätzlich ist in dieser Patentschrift ein Verfahren beschrieben zum Betrieb einer im Viertakt arbeitenden Hubkolben-Brennkraftmaschine mit einem homogenen, mageren Grundgemisch aus Luft, Kraftstoff und zurückgehaltenem Abgas sowie mit einer Kompressionszündung und einer direkten Kraftstoffeinspritzung in den Brennraum, dessen Volumen sich zyklisch ändert und der durch mindestens ein Einlassorgan mit Frischgas befüllbar ist und die Verbrennungsabgase durch mindestens ein Auslassorgan zumindest teilweise aus dem Brennraum ausschiebbar sind, wobei in einer Aktivierungsphase das zurückgehaltene Abgas im Bereich des Ladungswechseltotpunkts komprimiert und anschließend expandiert wird und dass in dieser Phase des Arbeitszyklusses Aktivierungskraftstoff zur Stabilisierung der Hauptverbrennung in den Brennraum eingespritzt wird.

Weiter wird in der DE 198 10 935 C2 die Voreinspritzung von Kraftstoff zur Stabilisierung der Hauptverbrennung und Ausweitung des Betriebsbereiches zu niedrigen Lasten genutzt. Bei einer vollständigen Verbrennung des Kraftstoffs wird die thermische Energie des zurückgehaltenen Abgases zur Sicherung der Zündung des nächsten Zyklus erhöht. Ist die Verbrennung unvollständig, so wird zumindest die chemische Aktivität der zurückbehaltenen Abgasmenge erhöht (Radikalbildung, Aktivierung), ohne dabei die Temperatur deutlich zu erhöhen. Über den Zeitpunkt der Voreinspritzung soll die Menge von umgesetzten zu aktiviertem Kraftstoff gesteuert werden.

Voraussetzung dafür ist eine weitestgehend homogene Verteilung der eingespritzten Kraftstoffmenge. In der Realität wird aber bei den Einspritzzeitpunkten im Bereich oberer Ladungswechsel-OT, d. h. bei Temperaturen, bei denen die Zündverzugszeit von Kraftstoff im erforderlichen Zeitbereich liegt, der Kraftstoff bereits reagieren, bevor eine homogene Verteilung des Kraftstoffs im Brennraum vorliegt. In diesen Fällen wird aber der Grad der Homogenisierung von Arbeitsspiel zu Arbeitsspiel variieren und eine Kontrolle von umgesetztem zu aktiviertem Kraftstoff wird in der Realität nicht möglich sein. Verstärkt wird dieser Effekt noch durch Temperaturschwankungen im zurückgehaltenen Abgas und Schwankungen beim Grad der Ladungsbewegung.

Aus der EP 1 681 452 A1, von der die vorliegende Erfindung ausgeht, ist ein mageres Brennverfahren für eine Viertakt-Hubkolben-Brennkraftmaschine mit einem Zylinder in dem ein Brennraum von einem Zylinderkopf und einem hubbeweglichen Kolben begrenzt ist bekannt, dessen Volumen von dem Kolben veränderbar ist und wobei ein Kraftstoff direkt in den Brennraum einbringbar ist, wobei zumindest ein Gaswechseleinlass- und ein Gaswechselauslassventil für einen Ladungswechsel vorgesehen sind und wobei im Brennraum zu einem oberen Ladungswechseltotpunkt (LWOT) eine Zwischenkompression einstellbar ist und zu einem oberen Zündtotpunkt (ZOT) eine Hauptkompression einstellbar ist, mit folgenden Verfahrensschritten nach einer Expansionsphase:
- Schließen des Gaswechselauslassventils vor LWOT;
- Einbringen einer Pilotmenge von Kraftstoff in der Zwischenkompression bis spätestens zum LWOT und Kompression der Pilotmenge des Kraftstoffes und eines Restabgases im Zylinder zur Bildung von Zwischenprodukten und vollständigen Verbrennungsprodukten;
- Öffnen des Gaswechseleinlassventils nach LWOT und Einbringen eines Frischgases in einer Ansaugphase in den Brennraum;
- Einbringen einer Hauptmenge eines Kraftstoffes in den Brennraum während der Ansaugphase und Schließen des Gaswechseleinlassventils;
- Komprimieren des Frischgases und des Kraftstoffes in der Hauptkompressionsphase;
- Zünden eines im Brennraum gebildeten Gemisches aus Frischgas und Kraftstoff;
- Expandieren, Öffnen des Gaswechselauslassventiles und Ausschieben eines durch eine Verbrennung gebildeten Abgases in der Expansionsphase, wobei
- durch eine kontrollierte Umsetzung der Pilotmenge des Kraftstoffes in die Zwischenprodukte und in die vollständigen Verbrennungsprodukte eine Zwischenkompressionsmaximaltemperatur durch Variation des Schließzeitpunktes des Gaswechselauslassventils einstellbar ist oder eine Zwischenkompressionsmaximaltemperatur durch Variation des Öffnungszeitpunktes des Gaswechseleinlassventils vor LWOT einstellbar ist und
- die Masse der Pilotmenge des Kraftstoffes variierbar ist, wobei
- die Hauptmenge des Kraftstoffs größer als Null, aber weniger als 50% der Gesamtmenge des eingespritzten Kraftstoffs beträgt.

Praktische Untersuchungen und numerische Simulationen haben gezeigt, dass sich das Verbrennungsverhalten als nicht besonders stabil herausgestellt hat.

Aufgabe der vorliegenden Erfindung ist es, eine robuste, in der Realität umsetzbare Maßnahmen zur Stabilisierung der Hauptverbrennung aufzuzeigen.

Diese Aufgabe wird durch die Merkmale im kennzeichnenden Teil des Patentanspruchs dadurch gelöst, dass für eine kontrollierte Umsetzung der Pilotmenge des Kraftstoffs in Zwischenprodukte (CH₂O, H₂O₂, CO, C₂H₄, C₃H₄ etc.) und/oder die vollständigen Verbrennungsprodukte (CO₂, H₂O):
- die Einbringung der Pilotmenge des Kraftstoffes unmittelbar nach dem Schließen des Gaswechselauslassventils erfolgt und
- die Pilotmenge von Kraftstoff maximal 50 % einer Gesamtmenge von Kraftstoff beträgt.

Um eine ausreichende Homogenisierung der voreingespritzten Kraftstoffmenge zu erzielen, muss diese in den Zeitbereichen eingespritzt werden, in denen das zurückgehaltene Abgas Bedingungen aufweist (Temperatur, Druck, Luftverhältnis), die bei den vorliegenden Zündverzugszeiten unkritisch sind, d. h. der Kraftstoff reagiert sehr langsam, so dass ausreichend Zeit zur Homogenisierung bleibt. Am einfachsten lässt sich dies durch eine Einspritzung gleich nach Auslassgaswechselventil schließt (AS) erreichen. Die Temperatur des zurückbehaltenen Abgases ist zu dem Zeitpunkt am niedrigsten und die Zeitdauer bis zu der gewünschten Reaktion am längsten. Da über die Einspritzung bzw. das Strahldesign des Kraftstoffs keine "perfekte" Homogenisierung durchführbar ist, kann man die Zeit vom Einspritzeitpunkt des Kraftstoffs bis zur Reaktion nutzen, um durch entsprechende Maßnahmen, wie z. B. Erhöhung der Ladungsbewegung bzw. des Turbulenzgrades, die Homogenisierung zu unterstützen. Die Erhöhung des Turbulenzgrades kann beispielsweise durch einen variablen Ventilhub, durch Ventilhubphasing (unterschiedliche Gaswechselventilhubverläufe für gleichwirkende Gaswechselventile) auf der Auslassseite, Quetschflächen im Brennraum, usw. erfolgen. Dies sind dem Fachmann bekannte Maßnahmen. Die dann noch vorhandenen Schwankungen beim Grad der Homogenisierung sind weitgehend vernachlässigbar.

Da in dem Fall eine Steuerung des aktivierten bzw. umgesetzten Kraftstoffes über den Zeitpunkt der Voreinspritzung nicht mehr möglich ist, wird dazu folgendes Verfahren vorgeschlagen:
Bei gegebener Homogenisierung hängt die Zündverzugszeit des Kraftstoffes im Wesentlichen von der Temperatur, dem Druck und dem Luftverhältnis im Brennraum ab. Beeinflusst wird dies zusätzlich durch die Drehzahl der Brennkraftmaschine, da die "Zeitwelt" drehzahlabhängig ist.

Sind die Abhängigkeiten der Zündverzugszeit von der Temperatur, dem Druck und dem Luftverhältnis bei den verschiedenen Drehzahlen bekannt, lässt sich über diese Größen erfindungsgemäß die gewünschte Menge an umgesetzten bzw. aktiviertem Kraftstoff einstellen und steuern.

Diese Größen lassen sich z. B. durch den Zeitpunkt für Auslassgaswechselventil schließt (AS), der Voreinspritzmenge von Kraftstoff in einfacher Weise einstellen.

Durch das erfindungsgemäße Verfahren kann der HCCI-Betriebsbereich bei reduziertem Verbrauch, reduzierten NOx-Emissionen und reduziertem Verbrennungsgeräusch problemlos ausgeweitet werden. Weiter ist das erfindungsgemäße Verfahren ein weltweit einsetzbares Magerbrennverfahren für unterschiedliche Kraftstoffqualitäten. In vorteilhafter Weise werden der Aufwand und die Kosten für die Abgasnachbehandlung reduziert, da eine teure und technisch aufwendige Magerabgasnachbehandlung entfallen kann.

Die Verfahrensschritte gemäß den Unteransprüchen 2 bis 5 sind vorteilhafte Weiterbildungen des erfindungsgemäßen Verfahrens.

Im Folgenden ist das erfindungsgemäße Verfahren anhand von drei Figuren näher erläutert.
- Fig. 1: zeigt einen Zylinderinnendruckverlauf für eine Viertakt-Hubkolbenbrennkraftmaschine über 720° Kurbelwinkel.
- Fig. 2: zeigt in einem Diagramm eine Abhängigkeit einer aktivierten Pilotmenge von Kraftstoff von einem Einspritzzeitpunkt.
- Fig. 3: zeigt in einem Diagramm eine Auswirkung eines Homogenisierungsgrades eines Kraftstoff/Luft-Gemisches auf ein nutzbares Temperaturfenster in einer Zwischenkompressionsphase.

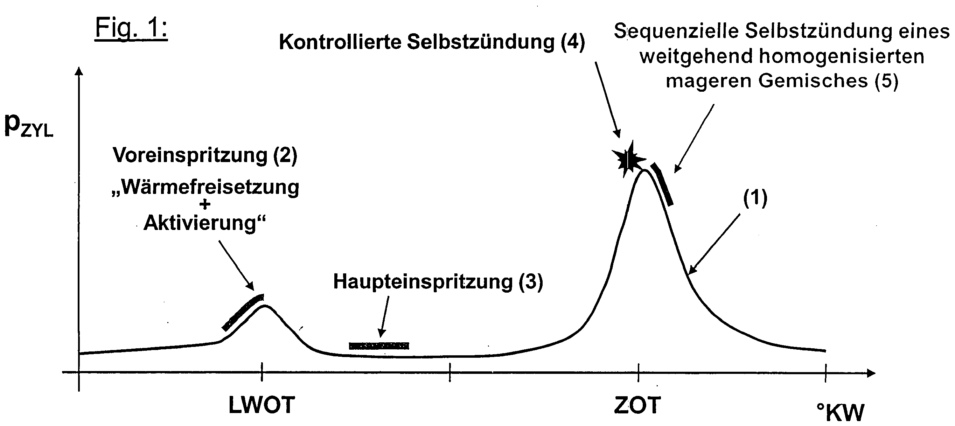

Fig. 1 zeigt einen Zylinderinnendruckverlauf 1 für eine nicht dargestellte Viertakthubkolben-Brennkraftmaschine über 720° Kurbelwinkel (°KW) auf einer X-Achse. Auf einer Y-Achse ist ein Zylinderinnendruckverlauf (p_{ZYL}) aufgetragen. Der Druckverlauf entspricht einem mageren HCCI-Brennverfahren für eine Viertakt-Hubkolben-Brennkraftmaschine mit zumindest einem Zylinder, in dem ein Brennraum von einem Zylinderkopf und einem in dem Zylinder hubbeweglich angeordneten Kolben begrenzt ist. Das Volumen des Brennraums ist durch die Hubbeweglichkeit des Kolbens veränderbar und ein Kraftstoff (z. B. Benzin, Diesel, etc.) ist direkt in diesen

Brennraum einbringbar. Weiter weist die Viertakt-Hubkolben-Brennkraftmaschine zumindest ein Gaswechseleinlass- und ein Gaswechselauslassventil für den Ladungswechsel auf und im Brennraum lässt sich zu einem oberen Ladungswechseltotpunkt (LWOT) eine Zwischenkompression einstellen. Dies entspricht dem ersten Druckanstieg in Fig. 1 im Bereich LWOT auf der X-Achse. Zu einem oberen Zündtotpunkt (ZOT) ist eine Hauptkompression einstellbar, dies entspricht dem zweiten Druckanstieg in Fig. 1 im Bereich ZOT auf der X-Achse. Das magere Brennverfahren weist folgende Verfahrensschritte nach einer Expansionsphase (Nullpunkt der X-Achse) auf:
- Schließen des Gaswechselauslassventils vor LWOT;
- Einbringen einer Pilotmenge von Kraftstoff in der Zwischenkompression und Kompression der Pilotmenge des Kraftstoffes und eines Restabgases im Zylinder zur Bildung von Zwischenprodukten (CH₂O, H₂O₂, CO, C₂H₄, C₃H₄, etc.) und/oder-vollständigen Verbrennungsprodukten (CO₂, H₂O);
- Öffnen des Gaswechseleinlassventils nach LWOT und Einbringen eines Frischgases in einer Ansaugphase in den Brennraum;
- Einbringen einer Hauptmenge eines Kraftstoffes in den Brennraum während der Ansaugphase und/oder der Hauptkompressionsphase und Schließen des Gaswechseleinlassventils;
- Komprimieren des Frischgases und des Kraftstoffes in der Hauptkompressionsphase;
- Zünden eines im Brennraum gebildeten Gemisches aus Frischgas und Kraftstoff;
- Expandieren, Öffnen des Gaswechselauslassventiles und Ausschieben einer Teilmenge eines durch eine Verbrennung gebildeten Abgases in der Expansionsphase;

Die Voreinspritzung 2 der Pilotmenge von Kraftstoff sowie die Wärmefreisetzung und Reformierung des Kraftstoffes und die Haupteinspritzung 3 sind als zu dem Zylinderinnendruckverlauf 1 parallele Balken über der Zylinderinnendruckkurve 1 aufgezeichnet, wobei die Voreinspritzung 2 gemäß dem Brennverfahren vor dem LWOT und die Haupteinspritzung 3 nach dem LWOT dargestellt sind. Die kontrollierte Selbstzündung 4 ist durch einen Stern im Bereich des ZOT dargestellt. Die weitere sequentielle Selbstzündung 5 des weitgehend homogenisierten mageren Kraftstoff/Luft-Gemischs ist durch einen weiteren Balken oberhalb des Druckverlaufs nach dem ZOT dargestellt. Für eine kontrollierte Umsetzung der Pilotmenge des Kraftstoffs in die Zwischenprodukte und/oder in die vollständigen Verbrennungsprodukte (CO₂, H₂O) werden erfindungsgemäß folgende Verfahrensschritte vorgeschlagen:
- die Einbringung der Pilotmenge des Kraftstoffes erfolgt bis spätestens zum LWOT und/oder
- eine Zwischenkompressionsmaximaltemperatur wird durch Variation des Schließzeitpunktes des Gaswechselauslassventils eingestellt und/oder
- eine Zwischenkompressionsmaximaltemperatur wird durch Variation des Öffnungszeitpunktes des Gaswechseleinlassventils vor LWOT eingestellt und/oder
- eine variable Verdichtung in der Zwischenkompression und/oder
- die Masse der Pilotmenge des Kraftstoffes wird variiert.

Bevorzugt wird die Pilotmenge des Kraftstoffs unmittelbar nach dem Schließen des Gaswechselauslassventils in den Brennraum eingebracht. Weiter beträgt die Pilotmenge bevorzugt maximal 50 % einer gesamten Menge des je Zyklus eingespritzten Kraftstoffs. Weiter kann die Zündung des Kraftstoff/Luft-Gemisches durch eine Selbst- und/oder Fremdzündung erfolgen, wobei in einem weiten Bereich eine Selbstzündung bevorzugt wird. Besonders bevorzugt wird die Zwischenkompressionsmaximaltemperatur beim Betrieb der Brennkraftmaschine ohne Einbringung der Pilotmenge des Kraftstoffes zwischen 900 K und 1300 K gehalten. Weiter werden besonders bevorzugte Zwischenprodukte während des LWOT durch eine Unterschneidung der Gaswechselventile gebildet. Weiter wird besonders bevorzugt der Turbulenzgrad der Frischluft im Zylinder durch einen variablen Gaswechselventilhub und/oder durch Quetschflächen verändert.

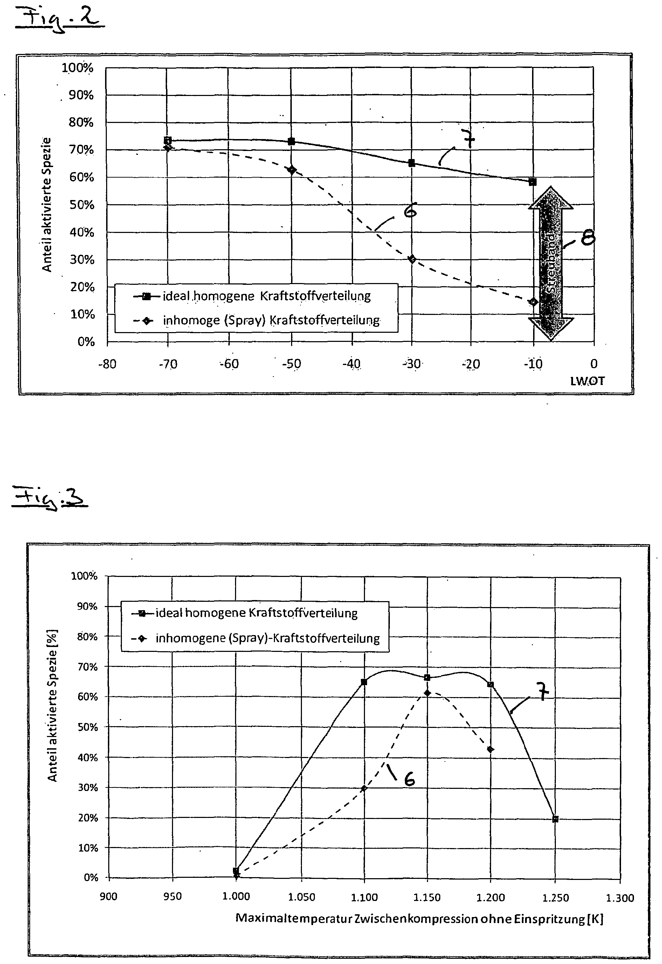

Fig. 2 zeigt in einem Diagramm eine Abhängigkeit einer aktivierten Pilotmenge von Kraftstoff von einem Einspritzzeitpunkt. Es handelt sich wie auch in Fig. 3 um eine numerische Simulation. Die X-Achse ist in Grad Kurbelwinkel (°KW) aufgeteilt, beginnend bei 80 °KW vor LWOT bis zum LWOT. Über die Y-Achse ein Anteil von aktivierten Spezies [0 - 100%] der Pilotmenge von Kraftstoff aufgetragen.

Dargestellt sind zwei Graphen 6, 7, einer mit Quadraten und einer mit Rauten. Die Rauten stehen für ein inhomogenes Kraftstoff-Spray, die Quadrate für ein homogenes Kraftstoff/Luft-Gemisch. Aufgetragen sind diese Graphen 6, 7 jeweils entsprechend einem Einbringzeitpunkt des Kraftstoffes in den Brennraum bei 70, 50, 30 10 °KW vor LWOT. Deutlich erkennbar ist, dass der Anteil der aktivierten Spezies abnimmt, je näher der Einbringzeitpunkt am LWOT ist. Äußerst stark ist dieser Abfall beim inhomogenen Kraftstoff-Spray. Diesem mittleren Verlauf des Graphen 6 ist noch ein Streuband der aktivierten Spezies überlagert, das im Folgenden beschrieben wird.

In der DE 198 10 935 C2 wird vorgeschlagen (Graph für ein inhomogenes Kraftstoff-Spray 6) über den Zeitpunkt der Voreinspritzung 2 die Menge von umgesetztem zu aktiviertem Kraftstoff zu steuern. Figur 2 zeigt eine entsprechende Abhängigkeit der aktivierten Menge von Kraftstoff vom Einspritzzeitpunkt für eine Einspritzung mit einem realen Spray. In der Realität wird aber bei Einspritzzeitpunkten nahe dem LWOT, d.h. bei Temperaturen im Brennraum, bei denen die Zündverzugszeit vom Kraftstoff im erforderlichen Zeitbereich liegt, der Kraftstoff schon reagieren, bevor eine homogene Verteilung des Kraftstoffes im Brennraum vorliegt. Der Grad der Homogenisierung wird somit von Arbeitspiel zu Arbeitsspiel variieren (Streuband 8) und eine Kontrolle von umgesetztem zu aktiviertem Kraftstoff wird in der Realität nicht möglich sein. Verstärkt wird dieser Effekt noch durch Temperaturschwankungen im zurückgehaltenen Abgas und Schwankungen beim Grad der Ladungsbewegung.

Welchen Einfluss der Homogenisierungsgrad hat, zeigt eine Grenzbetrachtung mit ideal homogener Kraftstoffverteilung, der Graph für homogenes Kraftstoff/Luft-Gemisch 7 und damit die Streuung des Anteils aktivierter Spezies abhängig vom Homogenisierungsgrad bei Einspritzzeitpunkten nahe dem LWOT. Um eine ausreichende Homogenisierung der voreingespritzten Kraftstoffmenge zu erzielen, muss diese sehr früh eingespritzt werden. Bei gegebener Homogenisierung hängt die Zündverzugszeit des Kraftstoffes im Wesentlichen von der Temperatur und dem Luftverhältnis ab. Beeinflusst wird dies zusätzlich durch die Drehzahl, da die "Zeitwelt" von der Drehzahl abhängt.

Sind die Abhängigkeiten der Zündverzugszeit von der Temperatur und dem Luftverhältnis bei den verschiedenen Drehzahlen bekannt, lässt sich über diese Größen, die gewünschte Menge an umgesetztem bzw. aktiviertem Kraftstoff erfindungsgemäß in einfacher Weise einstellen und steuern.

Fig. 3 zeigt in einem Diagramm die Auswirkung des Homogenisierungsgrades des Kraftstoff/Luft-Gemisches auf ein nutzbares Temperaturfenster in einer Zwischenkompressionsphase. Über die X-Achse ist eine Temperatur im Brennraum während der Zwischenkompressionsphase von 900 K bis 1300 K dargestellt, wie sie sich einstellt, wenn keine Pilotmenge des Kraftstoffes eingebracht wird. Über die Y-Achse ist der Anteil an aktivierten Spezies von Kraftstoff [0 - 100%] dargestellt, wiederum als Graph für eine ideal homogene Kraftstoffverteilung 7 mit Quadraten und als inhomogenes Spray 6 mit Rauten.

Deutlich sichtbar ist, dass für die homogene Kraftstoffverteilung über einen deutlich breiteren Temperaturbereich ein sehr stabiler, hoher Anteil von aktivierten Spezies erzielbar ist, während für eine inhomogene Sprayeinbringung nur ein sehr schmales Temperaturfenster vorliegt, in dem eine hohe Aktivierung des Kraftstoffes möglich ist.

Durch das erfindungsgemäße Verfahren wird der HCCI-Betriebsbereich bei reduziertem Verbrauch, reduzierten NOx-Emissionen und einem reduzierten Verbrennungsgeräusch ausgeweitet. Darüber hinaus handelt es sich um ein weltweit einsetzbares Magerbrennverfahren. Weiter werden der Aufwand und die Kosten für die Abgasnachbehandlung reduziert, da eine Magerabgasnachbehandlung entfallen kann.

### Bezugszeichenliste:

- 1.: Zylinderinnendruckverlauf
- 2.: Voreinspritzung
- 3.: Haupteinspritzung
- 4.: Kontrollierte Selbstzündung
- 5.: Sequentielle Selbstzündung
- 6.: Graph inhomogenes Kraftstoff-Spray
- 7.: Graph homogenes Kraftstoff/Luft-Gemisch
- 8.: Streuband

## Patentansprüche

1. Mageres Brennverfahren für eine Viertakt-Hubkolben-Brennkraftmaschine mit einem Zylinder in dem ein Brennraum von einem Zylinderkopf und einem hubbeweglichen Kolben begrenzt ist, dessen Volumen von dem Kolben veränderbar ist und wobei ein Kraftstoff direkt in den Brennraum einbringbar ist, wobei zumindest ein Gaswechseleinlass- und ein Gaswechselauslassventil für einen Ladungswechsel vorgesehen sind und wobei im Brennraum zu einem oberen Ladungswechseltotpunkt (LWOT) eine Zwischenkompression einstellbar ist und zu einem oberen Zündtotpunkt (ZOT) eine Hauptkompression einstellbar ist, mit folgenden Verfahrensschritten nach einer Expansionsphase:
- Schließen des Gaswechselauslassventils vor LWOT;
- Einbringen einer Pilotmenge von Kraftstoff in der Zwischenkompression bis spätestens zum LWOT und Kompression der Pilotmenge des Kraftstoffes und eines Restabgases im Zylinder zur Bildung von Zwischenprodukten (CH₂O, H₂O₂, CO, C₂H₄, C₃H₄, etc.) und vollständigen Verbrennungsprodukten (CO₂, H₂O);
- Öffnen des Gaswechseleinlassventils nach LWOT und Einbringen eines Frischgases in einer Ansaugphase in den Brennraum;
- Einbringen einer Hauptmenge eines Kraftstoffes in den Brennraum während der Ansaugphase und/oder der Hauptkompressionsphase und Schließen des Gaswechseleinlassventils;
- Komprimieren des Frischgases und des Kraftstoffes in der Hauptkompressionsphase;
- Zünden eines im Brennraum gebildeten Gemisches aus Frischgas und Kraftstoff;
- Expandieren, Öffnen des Gaswechselauslassventiles und Ausschieben eines durch eine Verbrennung gebildeten Abgases in der Expansionsphase;
**gekennzeichnet durch** eine kontrollierte Umsetzung der Pilotmenge des Kraftstoffes in die Zwischenprodukte und in die vollständigen Verbrennungsprodukte (CO₂, H₂O) durch die Verfahrensschritte, dass
- eine Zwischenkompressionsmaximaltemperatur durch Variation des Schließzeitpunktes des Gaswechselauslassventils einstellbar ist und/oder
- eine Zwischenkompressionsmaximaltemperatur durch Variation des Öffnungszeitpunktes des Gaswechseleinlassventils vor LWOT einstellbar ist und
- die Masse der Pilotmenge des Kraftstoffes variierbar ist, wobei
- die Einbringung der Pilotmenge des Kraftstoffes unmittelbar nach dem Schließen des Gaswechselauslassventils erfolgt und
- die Pilotmenge von Kraftstoff maximal 50 % einer Gesamtmenge von Kraftstoff beträgt.

2. Brennverfahren nach Patentanspruch 1,
**dadurch gekennzeichnet, dass** die Zündung des Gemisches durch eine Selbst- und/oder Fremdzündung erfolgt.

3. Brennverfahren nach einem der Patentansprüche 1 oder 2,
**dadurch gekennzeichnet, dass** die Zwischenkompressionsmaximaltemperatur bei Betrieb der Brennkraftmaschine ohne Kraftstoffeinspritzung zwischen 900 K und 1300 K liegt.

4. Brennverfahren nach einem der Patentansprüche 1 bis 3,
**dadurch gekennzeichnet, dass** Zwischenprodukte während des Ladungswechseltotpunktes (LWOT) durch eine Unterschneidung der Gaswechselventile gebildet werden.

5. Brennverfahren nach einem der Patentansprüche 1 bis 4,
**dadurch gekennzeichnet, dass** ein Turbulenzgrad der Frischluft im Zylinder durch einen variablen Gaswechselventilhub und/oder durch Quetschflächen veränderbar ist.

## Claims

1. A lean combustion method for a four-stroke reciprocating internal combustion engine with a cylinder in which a combustion chamber is delimited by a cylinder head and a piston which is movable in reciprocating manner, the volume of which chamber can be altered by the piston and wherein a fuel can be introduced directly into the combustion chamber, wherein at least one gas exchange inlet valve and one gas exchange outlet valve are provided for a charge cycle, and wherein an intermediate compression can be set in the combustion chamber at a charge cycle top dead centre (LWOT) and a main compression can be set at an ignition top dead centre (ZOT), having the following method steps after an expansion phase:
- closing the gas exchange outlet valve before LWOT;
- introducing a pilot quantity of fuel in the intermediate compression up to at the latest the LWOT and compressing the pilot quantity of the fuel and a residual exhaust in the cylinder to form intermediate products (CH₂O, H₂O₂, CO, C₂H₄, C₃H₄, etc.) and complete combustion products (CO₂, H₂O);
- opening the gas exchange inlet valve after LWOT and introducing a fresh gas in an intake phase into the combustion chamber;
- introducing a main quantity of a fuel into the combustion chamber during the intake phase and/or the main compression phase, and closing the gas exchange inlet valve;
- compressing the fresh gas and the fuel in the main compression phase;
- igniting a mixture of fresh gas and fuel formed in the combustion chamber;
- expanding, opening the gas exchange outlet valve and expelling an exhaust gas formed by a combustion, in the expansion phase;
**characterised by** a controlled conversion of the pilot quantity of the fuel into the intermediate products and into the complete combustion products (CO₂, H₂O) by the method steps that
- a maximum intermediate compression temperature can be set by varying the time of closing of the gas exchange outlet valve and/or
- a maximum intermediate compression temperature can be set by varying the time of opening of the gas exchange inlet valve before LWOT, and
- the mass of the pilot quantity of the fuel is variable,
- the introduction of the pilot quantity of the fuel taking place immediately after the closing of the gas exchange outlet valve, and
- the pilot quantity of fuel being at most 50% of a total quantity of fuel,

2. A combustion method according to Claim 1,
**characterised in that** the ignition of the mixture takes place by a self-ignition and/or spark ignition.

3. A combustion method according to one of Claims 1 or 2,
**characterised in that** the maximum intermediate compression temperature when operating the internal combustion engine without fuel injection lies between 900 K and 1300 K.

4. A combustion method according to one of Claims 1 to 3,
**characterised in that** intermediate products during the charge cycle dead centre (LWOT) are formed by an undercutting of the gas exchange valves.

5. A combustion method according to one of Claims 1 to 4,
**characterised in that** a degree of turbulence of the fresh air in the cylinder can be altered by a variable gas exchange valve stroke and/or by quench areas.

## Revendications

1. Procédé de combustion maigre destiné à un moteur à combustion interne à piston alternatif à quatre temps équipé d'un cylindre dans lequel une chambre de combustion est délimitée par une culasse et un piston mobile en va et vient et dont le volume peut être modifié par le piston, du carburant pouvant directement être introduit dans la chambre de combustion, au moins une soupape d'admission de gaz et une soupape d'échappement de gaz étant prévues pour permettre des échanges de gaz, et dans la chambre de combustion, au niveau d'un point mort d'échange de gaz haut (LWOT) une compression intermédiaire pouvant être établie, tandis qu'au niveau d'un point mort d'allumage haut (ZOT) une compression principale peut être établie, procédé comprenant, après une phase de détente les étapes suivantes consistant à :
- fermer la soupape d'échappement de gaz avant le LWOT,
- introduire une quantité de carburant pilote avec la compression intermédiaire jusqu'au plus tard le LWOT et comprimer la quantité de carburant pilote et le gaz d'échappement résiduel dans le cylindre pour former des produits intermédiaires (CH₂O, H₂O₂, CO, C₂H₄, C₃H₄, etc), et des produits de combustion complète (CO₂, H₂O),
- ouvrir la soupape d'admission de gaz après le LWOT et introduire du gaz frais dans une phase d'aspiration dans la chambre de combustion,
- introduire une quantité principale de carburant dans la chambre de combustion pendant la phase d'aspiration et/ou la phase de compression principale et fermer la soupape d'admission de gaz,
- comprimer le gaz frais et le carburant dans la phase de compression principale,
- allumer le mélange de gaz frais et de carburant formé dans la chambre de combustion,
- détendre, ouvrir la soupape d'échappement de gaz et évacuer les gaz d'échappement formés par la combustion dans la phase de détente,
procédé **caractérisé par** une transformation contrôlée de la quantité de carburant pilote en produits intermédiaires et en produits de combustion complète (CO₂, H₂O) par des étapes de procédé, selon lesquelles :
- la température maximum de compression intermédiaire peut être réglée en faisant varier l'instant de fermeture de la soupape d'échappement de gaz, et/ou
- la température maximum de compression intermédiaire peut être réglée en faisant varier l'instant d'ouverture de la soupape d'admission de gaz avant le LWOT, et
- la masse de la quantité de carburant pilote peut être modifiée,
- l'introduction de la quantité de carburant pilote étant effectuée immédiatement après la fermeture de la soupape d'échappement de gaz, et
- la quantité de carburant pilote étant au maximum égale à 50% de la quantité totale de carburant.

2. Procédé de combustion conforme à la revendication 1,
**caractérisé en ce que**
l'allumage du mélange est effectué par auto allumage et/ou par allumage externe.

3. Procédé de combustion conforme à l'une des revendications 1 et 2,
**caractérisé en ce que**
la température maximum de compression intermédiaire lors du fonctionnement du moteur à combustion interne sans injection de carburant est située entre 900 K et 1300 K.

4. Procédé de combustion conforme à l'une des revendications 1 à 3,
**caractérisé en ce que**
des produits intermédiaires sont formés pendant le point mort d'échange de gaz (LWOT) par un évidement des soupapes d'échange de gaz.

5. Procédé de combustion conforme à l'une des revendications 1 à 4,
**caractérisé en ce que**
le taux de turbulence de l'air frais dans le cylindre peut être modifié en faisant varier la course des soupapes d'échange de gaz et/ou par des surfaces d'écrasement.
